(19) Europäisches Patentamt
European Patent Office
Office européen des brevets

(11) **EP 4 267 794 B1**

(12) **FASCICULE DE BREVET EUROPEEN**

(45) Date de publication et mention
de la délivrance du brevet:
**13.11.2024   Bulletin 2024/46**

(21) Numéro de dépôt: **21852047.6**

(22) Date de dépôt: **21.12.2021**

(51) Classification Internationale des Brevets (IPC):
**D21H 17/37** *(2006.01)*      **D21H 21/10** *(2006.01)*

(52) Classification Coopérative des Brevets (CPC):
**D21H 21/10; D21H 17/37; D21H 17/375**

(86) Numéro de dépôt international:
**PCT/FR2021/052418**

(87) Numéro de publication internationale:
**WO 2022/136794 (30.06.2022 Gazette 2022/26)**

(54) **PROCEDE DE FABRICATION DE PAPIER OU DE CARTON**

VERFAHREN ZUR HERSTELLUNG VON PAPIER ODER PAPPE

METHOD FOR MAKING PAPER OR CARDBOARD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **22.12.2020   FR 2013917**

(43) Date de publication de la demande:
**01.11.2023   Bulletin 2023/44**

(73) Titulaire: **SNF Group
42160 Andrézieux-Bouthéon (FR)**

(72) Inventeurs:
• **BARRIERE, Cyril
42160 Andrézieux Boutheon (FR)**
• **MARTEL, Bastien
42160 Andrézieux Boutheon (FR)**

(74) Mandataire: **Cabinet Laurent & Charras
Le Contemporain
50 Chemin de la Bruyère
69574 Dardilly Cedex (FR)**

(56) Documents cités:
**WO-A1-00/11046      WO-A1-2012/017172**

## Description

### Domaine de l'invention

La présente invention concerne un procédé pour la fabrication de papier ou de carton présentant des propriétés d'égouttage et de machinabilité améliorées. Plus précisément, l'invention a pour objet un procédé impliquant la préparation d'un polymère résultant d'une fonctionnalisation par des isocyanates et de l'addition de composés comprenant au moins une fonction aldéhyde avant son ajout à la suspension fibreuse servant à fabriquer le papier ou le carton.

La présente invention a également pour objet les papiers et cartons aux propriétés physiques améliorées obtenus par ce procédé.

### Etat antérieur de la technique

L'industrie papetière est en recherche constante d'optimisation de ses procédés de fabrication, plus particulièrement en termes de rendement, de productivité, de réduction des coûts et de qualité des produits finis.

L'utilisation de polymères comme agents de résistance à sec, d'égouttage et de machinabilité est très largement décrite.

Les propriétés d'égouttage (ou drainage) concernent la capacité du matelas fibreux à évacuer ou drainer le maximum d'eau avant la sécherie. Des propriétés d'égouttage améliorées impliquent un gain d'énergie et une augmentation de la capacité de production.

Par machinabilité, on désigne l'optimisation du fonctionnement de la machine à papier en augmentant la productivité par un meilleur égouttage sur la table, une meilleure siccité à la section de presse, une diminution des casses par une plus grande propreté des circuits et une diminution des dépôts.

Le document WO 2012/017172 décrit un procédé de fabrication d'une feuille de papier ou de carton présentant des propriétés de rétention et d'égouttage améliorées.

Le document WO 00/11046 décrit un procédé de fabrication du papier améliorant la résistance à sec ou à l'état humide.

Les polyvinylamines sont connues pour améliorer le drainage lors de la formation du papier. Le brevet US 8,262,859 décrit que la réaction de la polyvinylamine avec au moins un dialdéhyde produit une polyvinylamine fonctionnalisée qui confère au papier ou au carton une résistance améliorée à l'état humide et / ou sec. Toutefois cette réaction est très rapide, difficile à maîtriser, et elle est effectuée dans un milieu très dilué ce qui induit un coût important pour transporter le produit du lieu de production jusqu'au site de fabrication du papier. Cette réaction entraîne aussi une prise en gel du milieu réactionnel. De ce fait, cette réaction ne peut être entreprise directement sur le site de fabrication du papier juste en amont de l'injection du polymère dans la fibre cellulosique, au risque d'altérer la machinabilité à cause des dépôts générés sur la machine à papier.

### Exposé de l'invention

De manière inattendue, la Demanderesse a découvert qu'un procédé papetier mettant en oeuvre un polymère résultant, juste en amont de son injection dans une suspension fibreuse (avantageusement une suspension de fibres cellulosiques), d'une fonctionnalisation par des isocyanates et de l'addition de composés comprenant au moins une fonction aldéhyde permet d'améliorer les propriétés d'égouttage et de résistance à sec. De plus, durant ce procédé, aucune formation de gel de polymère n'est observée, ce qui permet de ne pas altérer la machinabilité.

Plus précisément, l'invention concerne un procédé de fabrication d'une feuille de papier ou de carton à partir d'une suspension fibreuse (avantageusement une suspension de fibres cellulosiques), pendant lequel un polymère hydrosoluble **P1** comprenant au moins un monomère non ionique choisi parmi l'acrylamide, le méthacrylamide, le N,N-diméthylacrylamide et l'acrylonitrile est soumis à une réaction **Re1** pour donner un polymère **P2,** lequel est soumis ensuite à une réaction **Re2** pour donner un polymère **P3,** lequel est injecté à la suspension fibreuse dans un délai de 24 heures (inférieur ou égal à 24 heures) depuis le début de la réaction **Re1** ;

- La réaction **Re1** consistant à ajouter un hydroxyde d'alcalin et/ou alcalino-terreux et un hypo-halogénure d'alcalin et/ou alcalino-terreux au polymère **P1** afin d'obtenir au terme de 10 secondes à 60 minutes le polymère **P2** fonctionnalisé par des isocyanates,
- La réaction **Re2** consistant à ajouter un composé fonctionnalisé par un au moins un aldéhyde ou pouvant générer au moins une fonction aldéhyde sur le polymère **P2** afin d'obtenir le polymère **P3.**

En d'autres termes, le procédé de fabrication d'une feuille de papier ou de carton à partir d'une suspension fibreuse, selon l'invention, comprend les étapes suivantes :

a) injection d'un polymère **P3** dans une suspension de fibres cellulosiques,
b) formation d'une feuille de papier ou de carton,
c) séchage de la feuille de papier ou de carton,

le polymère **P3** étant préparé, préalablement à l'étape a), selon les réactions **Re1** à **Re2,** à partir d'un polymère hydrosoluble **P1** d'au moins un monomère non ionique choisi parmi l'acrylamide, le méthacrylamide, le N,N-diméthylacrylamide, et l'acrylonitrile :

- **Re1** : préparation d'un polymère **P2** comprenant des fonctions isocyanate par réaction pendant 10 secondes à 60 minutes entre (i) un hydroxyde d'alcalin et/ou un hydroxyde d'alcalino-terreux, (ii) un hypo-halogénure d'alcalin et/ou un hypo-halogénure d'alcalino-terreux et (iii) le polymère **P1,**
- **Re2** : préparation d'un polymère **P3** par réaction entre (iv) un composé comprenant au moins une fonction aldéhyde ou un composé pouvant générer au moins une fonction aldéhyde et (v) le polymère **P2** comprenant des fonctions isocyanate,
- le polymère **P3** étant injecté à la suspension fibreuse lors de l'étape a) dans un délai de 24 heures par rapport au début de la réaction **Re1.**

Ce procédé est avantageusement dépourvu d'étape de décarboxylation (élimination de COz) après la réaction **Re1.** En effet, cela consommerait les fonctions isocyanate nécessaire à la réalisation de la réaction **Re2.** Le procédé est avantageusement dépourvu d'étape de décarboxylation (élimination de COz) après la réaction **Re2,** notamment lorsque la réaction **Re2** est partielle (réaction d'une partie des fonctions isocyanate).

Dans la suite de la description et dans les revendications, tous les dosages de polymère exprimés en $g.t^{-1}$ ou $kg.t^{-1}$ sont donnés en poids de polymère actif par tonne de matière sèche. La matière sèche correspond à l'extrait sec obtenu après évaporation de l'eau de la suspension fibreuse utilisée dans un procédé de fabrication d'une feuille de papier ou de carton. La matière sèche est généralement à base de fibres cellulosiques et de charges, avantageusement constituée de fibres cellulosiques et de charges. Le terme « fibres cellulosiques » englobe toute entité cellulosique, incluant les fibres, les fines, les microfibrilles ou les nanofibrilles. Par suspension fibreuse, on entend la pâte épaisse ou la pâte diluée qui sont à base d'eau et de fibres cellulosiques. La pâte épaisse (*Thick Stock*), ayant une concentration massique en matière sèche supérieure à 1 %, voire supérieure à 3 %, est en amont de la pompe de mélange (*fan-pump*). La pâte diluée (*Thin Stock*), ayant une concentration massique en matière sèche généralement inférieure à 1 %, est située en aval de la pompe de mélange.

Le terme « polymère », désigne aussi bien les homopolymères que les copolymères.

Un polymère amphotère est un polymère comprenant des charges cationiques et des charges anioniques, préférentiellement autant de charges anioniques que de charges cationiques.

Tel qu'utilisé ici, le terme "polymère hydrosoluble" désigne un polymère qui donne une solution aqueuse sans particule insoluble lorsqu'il est dissous sous agitation pendant 4 heures à 25°C et avec une concentration de 20 $g.L^{-1}$ dans l'eau.

Les plages de valeurs incluent les bornes inférieure et supérieure. Ainsi, les plages de valeurs « entre 0,1 et 1,0 » et « de 0,1 à 1 » incluent les valeurs 0,1 et 1,0.

Le polymère hydrosoluble **P1** contient au moins un monomère non ionique choisi parmi l'acrylamide, le méthacrylamide, le N,N-diméthylacrylamide, l'acrylonitrile. Optionnellement, il peut aussi contenir des monomères anioniques et/ou cationiques et/ou zwitterioniques.

Les monomères anioniques sont préférentiellement choisis dans le groupe comprenant les monomères possédant une fonction acide carboxylique et leurs sels dont l'acide acrylique, l'acide méthacrylique, l'acide itaconique, l'acide maléique ; les monomères possédant une fonction acide sulfonique et leurs sels; dont l'acide acrylamido tertio butyl sulfonique (ATBS), l'acide allyl sulfonique et l'acide méthallyl sulfonique, et leurs sels, et les monomères ayant une fonction acide phosphonique et leurs sels.

De manière générale, les sels de monomères anioniques des polymères **P1** à **P5** sont des sels d'un métal alcalin, d'un métal alcalino-terreux ou d'un ammonium (préférentiellement un ammonium quaternaire).

Les monomères cationiques sont préférentiellement choisis dans le groupe comprenant l'acrylate de diméthylaminoéthyle (ADAME) quaternisé ou salifié, le méthacrylate de diméthylaminoéthyle (MADAME) quaternisé ou salifié, le chlorure de diallyldiméthylammonium (DADMAC), le chlorure d'acrylamidopropyltriméthylammonium (APTAC), et le chlorure de méthacrylamidopropyltriméthylammonium (MAPTAC).

De manière avantageuse, les sels de monomères cationiques des polymères **P1** à **P5** sont des sels d'un halogénure, de préférence le chlorure.

Les monomères zwitterioniques sont préférentiellement choisis dans le groupe comprenant les monomères sulfobétaïnes comme le sulfopropyl diméthylammonium éthyl méthacrylate, le sulfopropyl diméthylammonium propylméthacrylamide, ou le sulfopropyl 2-vinylpyridinium ; les monomères phosphobétaïnes, comme le phosphato éthyl triméthylammonium éthyl méthacrylate ; et les monomères carboxybétaïnes.

De préférence, le polymère hydrosoluble **P1** est non ionique. En d'autres termes, il ne comprend préférentiellement que des monomères non ioniques. Encore plus préférentiellement, **P1** est un homopolymère d'acrylamide ou de méthacrylamide.

Le polymère **P1** peut être linéaire, structuré ou réticulé. Les agents réticulant permettant la structuration peuvent notamment être choisis parmi le sodium allyl sulfonate, le sodium méthallyl sulfonate, le sodium méthallyl disulfonate, le méthylènebisacrylamide, la triallylamine et le chlorure de triallylammonium.

La structuration du polymère **P1** peut aussi être obtenue avec au moins un composé polyfonctionnel contenant au moins 3 hétéroatomes choisis parmi N, S, O, P et présentant chacun au moins un hydrogène mobile. Ce composé polyfonctionnel peut notamment être une polyéthylèneimine ou une polyamine.

Le polymère **P1** présente un poids moléculaire moyen en poids compris entre 100 000 et 20 millions, préférentiellement entre 250 000 et 5 millions de daltons.

Selon la présente invention, le poids moléculaire moyen en poids du polymère **P1** est déterminé par mesure de la viscosité intrinsèque. La viscosité intrinsèque peut être mesurée par des méthodes connues de l'homme du métier et peut notamment être calculée à partir des valeurs de viscosité réduite pour différentes concentrations par une méthode graphique consistant à tracer les valeurs de viscosité réduite (sur l'axe des ordonnées) en fonction des concentrations (sur l'axe des abscisses) et en extrapolant la courbe à une concentration nulle. La valeur de viscosité intrinsèque est lue sur l'axe des ordonnées ou à l'aide de la méthode des moindres carrés. Ensuite, le poids moléculaire moyen en poids peut être déterminé par la célèbre équation de Mark-Houwink :

$$[\eta] = K\, M^{\alpha}$$

$[\eta]$ représente la viscosité intrinsèque du polymère déterminée par la méthode de mesure de la viscosité en solution,
K représente une constante empirique,
M représente le poids moléculaire du polymère,
$\alpha$ représente le coefficient de Mark-Houwink,
$\alpha$ et K dépendent du système particulier polymère-solvant. Des tableaux connus de l'homme du métier donnent les valeurs de $\alpha$ et K selon le système polymère-solvant.

La réaction **Re1** consiste à ajouter (i) un hydroxyde d'alcalin et/ou un hydroxyde d'alcalino-terreux et (ii) un hypo-halogénure d'alcalin et/ou un hypo-halogénure d'alcalino-terreux (iii) au polymère **P1** afin d'obtenir le polymère **P2** fonctionnalisé par des isocyanates.

Avantageusement, l'hydroxyde d'alcalin est la soude (hydroxyde de sodium) et l'hypo-halogénure d'alcalin est l'hypochlorite de sodium.

La réaction **Re1** est avantageusement effectuée sur le polymère **P1** à une concentration massique en polymère **P1** comprise entre 0,5 et 20 % en solution aqueuse, préférentiellement entre 1 et 10 %.

Pour la réaction **Re1,** le coefficient Alpha = moles d'hypo-halogénure (alcalin et/ou alcalino-terreux) / moles de monomère(s) non ionique(s) du polymère **P1** est compris entre 0,1 et 1,0 et le coefficient Béta = moles d'hydroxyde (alcalin et/ou alcalino-terreux) / moles d'hypo-halogénure (alcalin et/ou alcalino-terreux) est compris entre 0,5 et 4,0.

Le coefficient Alpha permet de déterminer la quantité de fonctions isocyanate formées lors de la réaction **Re1** à partir des monomères non ioniques du polymère **P1** (acrylamide, méthacrylamide, N,N-diméthylacrylamide et acrylonitrile). Il ne s'agit pas du coefficient de Mark-Houwink noté $\alpha$.

La réaction **Re1** est réalisée à une température comprise entre 30°C et 60°C.

Ainsi, selon un mode de réalisation particulier, la réaction **Re1** peut être réalisée à partir d'une solution aqueuse ayant une concentration massique en polymère **P1** comprise entre 0,5 et 20%, à une température comprise entre 30°C et 60°C et en présence d'un coefficient Alpha compris entre 0,1 et 1,0, le coefficient Alpha étant le rapport entre le nombre de moles d'hypo-halogénure et le nombre de moles de monomère non ionique du polymère **P1.**

La réaction **Re2** consiste à ajouter un composé comprenant au moins une fonction aldéhyde ou un composé pouvant générer au moins une fonction aldéhyde sur le polymère **P2** afin d'obtenir le polymère **P3.**

La réaction **Re2** est avantageusement effectuée sur le polymère **P2** à une concentration massique en polymère **P2** comprise entre 0,5 et 20 % en solution aqueuse, préférentiellement entre 1 et 5 %.

De manière avantageuse, la réaction **Re2** a lieu par ajout direct du composé comprenant au moins une fonction aldéhyde ou du composé pouvant générer au moins une fonction aldéhyde dans le milieu réactionnel (solution aqueuse) résultant de la réaction **Re1.**

La réaction **Re2** est réalisée à une température comprise entre 10°C et 60°C, préférentiellement entre 20 et 40°C.

Sans vouloir être limité par une quelconque théorie, il semblerait que, lors de la réaction **Re2,** les fonctions isocyanates du polymère **P2** réagissent avec les fonctions aldéhyde, par exemple afin de former des fonctions imine de type $-N=C(HR^1)$.

Le composé comprenant au moins une fonction aldéhyde présente un poids moléculaire avantageusement inférieur ou égal à 200 g.mol$^{-1}$.

Préférentiellement, le composé comprenant au moins une fonction aldéhyde est choisi parmi le glyoxal, le glutaraldéhyde, le furane-dialdéhyde, le 2-hydroxyadipaldéhyde, le succinaldéhyde, le dialdéhyde amidon, le 2,2-diméthoxyethanal et leurs combinaisons. Encore plus préférentiellement, le composé comprenant au moins une fonction aldéhyde est le glyoxal.

Le composé pouvant générer au moins une fonction aldéhyde présente un poids moléculaire avantageusement inférieur ou égal à 500 000 g.mol$^{-1}$, plus avantageusement inférieur ou égal à 100 000 g.mol$^{-1}$, par exemple inférieur ou égal à 50 000 g.mol$^{-1}$. Il présente un poids moléculaire avantageusement supérieur ou égal à 500 g.mol$^{-1}$, par exemple supérieur ou égal à 1 000 g.mol$^{-1}$.

Selon un mode de réalisation, le composé pouvant générer au moins une fonction aldéhyde est un polyépoxyde, par exemple le polyethylène glycol diépoxide ou le polyethylène glycol triepoxyde. Dans ce cas, il s'agit d'un précurseur d'un composé comprenant au moins une fonction aldéhyde.

Selon un autre mode de réalisation, le composé pouvant générer au moins une fonction aldéhyde est préférentiellement un polymère **P5** non ionique, cationique, anionique ou amphotère issu de la réaction entre au moins un composé comprenant au moins une fonction aldéhyde et au moins un polymère base **P4** d'au moins un monomère non-ionique choisi parmi l'acrylamide, le méthacrylamide, le N,N-diméthylacrylamide, et l'acrylonitrile.

Le polymère base **P4** peut-être non ionique, cationique ou anionique ou amphotère. Il est avantageusement hydrosoluble.

Le polymère **P4** peut comprendre un monomère cationique qui est préférentiellement choisi dans le groupe comprenant l'acrylate de diméthylaminoéthyle (ADAME) quaternisé ou salifié, le méthacrylate de diméthylaminoéthyle (MADAME) quaternisé ou salifié, le chlorure de dimethyldiallylammonium (DADMAC), le chlorure d'acrylamidopropyltrimethylammonium (APTAC), et le chlorure de methacrylamidopropyltrimethylammonium (MAPTAC).

Le polymère **P4** peut comprendre un monomère anionique qui est préférentiellement choisi parmi l'acide 2-acrylamido-2-méthylpropane sulfonique, l'acide acrylique, l'acide méthacrylique, l'acide itaconique, et/ou leurs sels.

Le composé comprenant au moins une fonction aldéhyde réagissant sur **P4** pour donner **P5** est avantageusement choisi parmi le glyoxal, le glutaraldéhyde, le furane-dialdéhyde, le 2-hydroxyadipaldéhyde, le succinaldéhyde, le dialdéhyde amidon, le 2,2-diméthoxyethanal et leurs combinaisons. Encore plus préférentiellement, le composé comprenant au moins une fonction aldéhyde est le glyoxal.

Le polymère **P5** présente un poids moléculaire avantageusement compris entre 100 000 g.mol$^{-1}$ et 2 000 000 g.mol$^{-1}$, par exemple entre 120 000 g.mol$^{-1}$ et 1 000 000 g.mol$^{-1}$.

Selon un mode de réalisation préféré, le polymère **P5** est obtenu par réaction d'un composé comprenant au moins une fonction aldéhyde et au moins un polymère base **P4** dans un délai maximal de 12 heures avant d'être ajouté au polymère **P2**. Il s'agit du délai entre le début de la réaction et l'addition à **P2**.

Pour la réaction **Re2** du procédé de l'invention, entre 2 et 50 %, préférentiellement entre 5 et 30 % de composé comprenant au moins une fonction aldéhyde ou de composé pouvant générer au moins une fonction aldéhyde sont additionnés au polymère **P2,** les pourcentages étant exprimés en poids par rapport au poids du polymère **P2.**

Ainsi, une partie ou la totalité des fonctions isocyanate du polymère **P2** peuvent être fonctionnalisées.

Selon un mode de réalisation particulier, un excès de composé comprenant au moins une fonction aldéhyde ou de composé pouvant générer au moins une fonction aldéhyde peut être ajouté. Dans ce cas, lors de la réaction **Re2,** la quantité molaire de fonctions aldéhyde est supérieure à celle de fonctions isocyanate.

Le polymère **P3** est avantageusement utilisé immédiatement après la réaction **Re2,** sans purification.

Selon un mode de réalisation préféré, le polymère **P3** est introduit dans les eaux blanches et/ou la pâte épaisse et/ou le mélange formé par les eaux blanches et la pâte épaisse après homogénéisation de la suspension fibreuse dans la pompe de dilution (fan pump).

Avantageusement, le polymère **P3** pourra aussi être introduit au sein du procédé papetier au niveau de la table de formation ou de la *size press* (coucheuse), par exemple par pulvérisation.

Entre 0,25 et 15 kg.t$^{-1}$, et préférentiellement entre 0,5 et 5 kg.t$^{-1}$ de polymère **P3** sont ajoutés à la suspension fibreuse.

La suspension fibreuse englobe l'utilisation possible de différentes fibres cellulosiques : fibres vierges, fibres recyclées, pâte chimique, pâte mécanique, cellulose micro fibrillée ou cellulose nano fibrillée. La suspension fibreuse englobe également l'utilisation de ces différentes fibres cellulosiques avec tous types de charges tel que le $TiO_2$, le $CaCO_3$ (broyée ou précipitée), le kaolin, les charges organiques et leurs mélanges

Le polymère **P3** peut être utilisé au sein du procédé papetier en combinaison avec d'autres produits tels que les coagulants minéraux ou organiques, les agents de résistance à sec, les agents de résistance humide, les polymères naturels tels que les amidons ou la carboxyméthylcellulose (CMC), les microparticules inorganiques telles que les microparticules de bentonite et les microparticules de silice colloïdale, les polymères organiques de toute nature ionique (non ionique, cationique, anionique, ou amphotère) et qui peuvent être (sans être limitatif) linéaires, branchés, réticulés, hydrophobes, ou associatifs.

Les exemples suivants illustrent l'invention sans toutefois en limiter la portée.

**Exemples de réalisation de l'invention**

**Procédures utilisées dans les essais applicatifs :**

a) Types de pâtes utilisées

Pâte fibres vierges :

La pâte humide est obtenue par désintégration de pâte sèche afin d'obtenir une concentration aqueuse finale de 1 % en poids. Il s'agit d'une pâte à pH neutre composée, en poids, à 90 % de fibres longues vierges blanchies, 10 % de fibres courtes vierges blanchies, et de 30 % de GCC (carbonate de calcium broyé) additionnels (Hydrocal® 55 de chez Omya) par rapport au poids des fibres.

Pâte fibres recyclées :

La pâte humide est obtenue par désintégration de pâte sèche afin d'obtenir une concentration aqueuse finale de 1 % en poids. Il s'agit d'une pâte à pH neutre composée à 100 % de fibres de cartons recyclées.

b) Evaluation des performances d'égouttage (DDA)

Le DDA (« Dynamic Drainage Analyzer ») permet de déterminer, de manière automatique, le temps (en secondes) nécessaire pour égoutter sous vide une suspension fibreuse. Les polymères sont ajoutés à la pâte humide (0,6 litre de pâte à 1,0 % en poids) dans le cylindre du DDA sous agitation à 1000 tours par minute :

- T=0 s : mise en agitation de la pâte
- T=20 s : Ajout du polymère
- T=30 s : arrêt de l'agitation et égouttage sous vide à 200 mbar (1 bar = $10^5$ Pa) pendant 70 secondes.

La pression sous la toile est enregistrée en fonction du temps. Lorsque toute l'eau est évacuée du matelas fibreux, l'air passe à travers celui-ci faisant apparaitre une rupture de pente sur la courbe représentant la pression sous toile en fonction du temps. Le temps, exprimé en secondes, relevé à cette rupture de pente correspond au temps d'égouttage. Plus le temps est faible, meilleur est donc l'égouttage sous vide.

c) Performances en application DSR (résistance à sec),grammage à 90 g.m$^{-2}$

La quantité nécessaire de pâte est prélevée de manière à obtenir au final une feuille présentant un grammage de 90 g.m$^{-2}$.

La pâte humide est introduite dans le cuvier de la fermette dynamique et est maintenue sous agitation. On injecte à cette pâte les différents composants du système selon la séquence prédéfinie. On respecte généralement un temps de contact de 30 à 45 secondes entre chaque ajout de polymère.

Des fermettes de papier sont réalisées avec une fermette dynamique automatique : un buvard et la toile de formation sont placés dans le bol de la fermette dynamique avant de démarrer la rotation du bol à 1000 tr.min$^{-1}$ et de construire le mur d'eau. La pâte traitée est répartie sur le mur d'eau pour former le matelas fibreux sur la toile de formation.

Une fois que l'eau est drainée, le matelas fibreux est récupéré, pressé sous une presse délivrant 4 bar, puis séché à 117°C. La feuille obtenue est conditionnée pendant une nuit dans une pièce à humidité et température contrôlées (50 % d'humidité relative et 23°C). Les propriétés de résistance à sec de toutes les feuilles obtenues par cette procédure sont alors mesurées.

L'éclatement est mesuré avec un éclatomètre Messmer Buchel M 405 selon la norme TAPPI T403 om-02. Le résultat est exprimé en kPa. On détermine l'indice d'éclatement, exprimé en kPa.m$^2$/g, en divisant cette valeur par le grammage de la feuille testée.

La longueur de rupture à l'état sec est mesurée dans le sens machine avec un appareil de traction Testometric AX selon la norme TAPPI T494 om-01. Le résultat est exprimé en km.

**Produits testés dans les essais applicatifs :**

*Polymère P1*

Dans un réacteur de 1 litre équipé d'un agitateur mécanique, d'un thermomètre, d'un réfrigérant et d'une canne plongeante d'azote gazeux, on introduit 310 g d'eau. Le pH du milieu réactionnel est ajusté à 3,3 à l'aide d'un tampon pH (NaOH 30 % en poids dans l'eau et $H_3PO_4$ 75 % en poids dans l'eau). Le milieu est chauffé et maintenu à température comprise entre 79 et 81°C grâce à un bain-marie. Grâce à deux coulées continues, on incorpore (coulée 1) 400 g d'acrylamide à 50 % en poids dans l'eau, 0,28 g de N,N-methylène-bis-acrylamide à 100 %, 237,8 g d'eau et 2,40 g de sodium methallyl sulfonate à 100 % pendant 180 minutes. Coulée 2, on incorpore 0,48 g de sodium persulfate à 100 % et 48 g d'eau pendant 180 minutes. Le polymère est laissé à 80°C pendant 120 minutes après la fin de la coulée.

La solution de polymère **P1** obtenue présente un pH de 5,7, une concentration en poids de polymère de 20 % et une viscosité de 6000 cps.

*Polymères P2*

Préparation d'une solution de **P1** à 10 % en poids dans l'eau, en diluant 20 g d'une solution de **P1** à 20% en poids dans l'eau avec 20 g d'eau. La solution de polymère est chauffée à 50°C.

Un mélange d'hypochlorite de sodium à 14,6 % (en poids dans l'eau) et de soude à 30 % (en poids dans l'eau) est préparé en fonction des coefficients alpha et beta pour la réaction **Re1**. Lorsque la solution de polymère **P1** est à 50°C, le mélange d'hypochlorite de sodium et de soude est ajouté sur **P1**. Après 30 secondes de réaction, de l'eau est additionné. On obtient le polymère **P2** (Tableau 1 : liste des polymères **P2**).

Tableau 1 : Polymères **P2**

|  | Coefficient alpha | Coefficient beta | Hypochlorite de sodium | Soude | Eau |
|---|---|---|---|---|---|
| **P2-A** | 0,35 | 2 | 10,05 | 5,25 | 144,70 |
| **P2-B** | 0,5 | 2 | 14,35 | 7,50 | 138,15 |
| **P2-C** | 0,7 | 2 | 20,10 | 10,50 | 129,40 |
| **P2-D** | 0,05 | 2 | 1,44 | 0,75 | 157,81 |
| **P2-E** | 0,35 | 6 | 10,05 | 15,75 | 134,20 |

*Polymères P3*

- 3 minutes après l'obtention des polymères **P2,** 1,7 g de glyoxal (40 % en poids dans l'eau) est additionné pour réaliser la réaction **Re2,** soit 17 % en poids par rapport au polymère. On obtient les polymères **P3-A1, P3-B1** et **P3-C1.**
- 3 minutes après l'obtention du polymère **P2-B,** 6,5 g de polymère **P5** et 25 g d'eau sont additionnés pour réaliser la réaction **Re2,** soit 11 % en poids par rapport au polymère. On obtient le polymère **P3-B3.**
- 3 minutes après l'obtention des polymères **P2,** le pH est ajusté à 10 et 0,67 g de glycérol triglycidyl éther (GE-100) est additionné pour réaliser la réaction **Re2,** soit 17 % en poids par rapport au polymère. On obtient les polymères **P3-A5** et **P3-B5.**
- 3 minutes après l'obtention des polymères **P2,** le pH est ajusté à 10 et 0,67 g de Pentaerythritol tetraglycidyl éther (GE-500) est additionné pour réaliser la réaction **Re2,** soit 17 % en poids par rapport au polymère. On obtient les polymères **P3-A6** et **P3-B6.**

*Polymère P4*

Dans un réacteur de 1 litre équipé d'un agitateur mécanique, d'un thermomètre, d'un réfrigérant et d'une canne plongeante d'azote gazeux, on introduit 153 g d'eau, 67 g de chlorure de diallyldiméthylammonium à 64 % et 5,0 g d'hypophosphite de sodium. Le pH du milieu réactionnel est ajusté à 2,5 à l'aide d'acide sulfurique 96 %. Le milieu est chauffé et maintenu à une température comprise entre 79 et 81°C grâce à un bain-marie. Grâce à deux coulées continues, on incorpore (coulée 1) 715 g d'acrylamide à 50 % en poids dans l'eau pendant 135 minutes. Coulée 2, on incorpore 4,0 g de sodium persulfate à 100 % et 56 g d'eau pendant 160 minutes. Le polymère est laissé à 80°C pendant 30 minutes après la fin de la coulée. 1 g de bisulfite de sodium à 40 % (en poids dans l'eau) est ajouté avant un vieillissement de 60 minutes à 80°C.

La solution de polymère **P4** obtenue présente un pH de 5,2, une concentration en poids de 40 % et une viscosité de 2300 cps.

*Polymère **P5***

Dans un réacteur agité de 1000 ml, 211 g de polymère **P4** et 745 g d'eau déminéralisée sont introduits. Le réacteur est équipé d'une sonde de mesure de pH. Après 10 minutes d'agitation, le pH est ajusté à 11,2 avec une solution de soude à 30 % en poids dans l'eau. La température est maintenue entre 19 et 26°C.

42 g de glyoxal à 40 % en poids dans l'eau sont additionnés. Un contrôle du pH et un suivi de la viscosité permettent d'obtenir un produit de 20 cps (viscosité de fin de réaction). Lorsque cette viscosité est atteinte, on stoppe la réaction par un abaissement du pH à moins de 3,5 par addition de $H_2SO_4$ à 92 % en poids dans l'eau. La viscosité finale et le pH sont enregistrés. On obtient le polymère **P5** à une concentration en poids de 7,5 %.

Pour toutes les mesures de viscosité, le viscosimètre est de type Brookfield, avec un module LV1 et une vitesse de 60 tr/min.

*Polymère **P3** - **CE** (contre-exemples)*

- 3 minutes après l'obtention du polymère **P2-D,** 1,7 g de Glyoxal (40 % en poids dans l'eau) est additionné pour réaliser la réaction **Re2,** soit 17 % en poids par rapport au polymère. On obtient le polymère **P3 - CE-1.** Celui-ci n'est pas stable est forme un gel solide.
- 3 minutes après l'obtention du polymère **P2-E,** 1,7 g de Glyoxal (40 % en poids dans l'eau) est additionné pour réaliser la réaction **Re2,** soit 17 % en poids par rapport au polymère. On obtient le Polymère **P3** - **CE-2.**

**Essais applicatifs**

*Performances d'égouttage (DDA).*

Remarque : Les essais étant réalisés par séries, un blanc est refait à chaque fois.

• Série 1

Tableau 2 : Egouttage en fonction du polymère P2 ou P3

| | Alpha | Drainage (s) | |
|---|---|---|---|
| | | 1,7 kg/T | 3,4 kg/T |
| **P2-A** | 0,35 | 17.46 | 14,46 |
| **P2-B** | 0,5 | 16,16 | 13,05 |
| **P2-C** | 0,7 | 15,88 | 12,88 |
| **P3-A-1** | 0,35 | 16,01 | 12,00 |
| **P3-B-1** | 0,5 | 14,58 | 10,89 |
| **P3-C-1** | 0,7 | 14,11 | 11,09 |
| Blanc | | 29,29 | |

On observe une amélioration de l'égouttage avec l'augmentation du coefficient alpha. Les polymères **P3** présentent des performances améliorées par rapport aux polymères **P2** pour un même coefficient alpha. Cela démontre le bénéfice engendré par la réaction **Re2.**

• Série 2

Tableau 3 : Egouttage en fonction du polymère

|  | Alpha | Drainage (s) | |
|---|---|---|---|
|  |  | **1,7 kg/T** | **3,4 kg/T** |
| **P2-B** | **0,5** | 18,34 | 13,03 |
| **P3-B-1** | **0,5** | 16,87 | 12,51 |
| **P3 B-3** | **0,5** | 17,52 | 12,73 |
| **P5** | / | 32,65 | 35,11 |
| **CE-3** | **0,5** | 21,69 | 15,04 |
| **Blanc** | | **34,4** | |
| **CE-3** : ajout simultané d'un polymère **P2** et d'un polymère **P5** sans mélange préalable dans la pâte à papier lors de la séquence d'égouttage. | | | |

Le polymère glyoxalé **P5** seul ne présente pas d'intérêt en égouttage. On observe une amélioration de l'égouttage avec les polymères **P3** par rapport à un polymère **P2**. L'ajout du polymère **P5 lors** de la réaction **Re2** sur le polymère **P2** permet d'obtenir un polymère plus performant.

• Série 3

Tableau 4 : Egouttage en fonction du polymère

|  | Alpha | Drainage (s) | |
|---|---|---|---|
|  |  | 1,7 kg/T | 3,4 kg/T |
| **P2-A** | 0,35 | 24,29 | 18,61 |
| **P3-A-5** | 0,35 | 18,17 | 12,54 |
| **P3-A-6** | 0,35 | 18,73 | 12,66 |
| **P2-B** | 0,5 | 20,88 | 14,77 |
| **P3-B-5** | 0,5 | 17,88 | 12,34 |
| **P3-B-6** | 0,5 | 17,25 | 11,95 |
| Blanc | | 34,25 | |

On observe une amélioration de l'égouttage avec les polymères **P3** issus de l'ajout d'un époxyde sur le polymère **P2,** lors de la réaction **Re2.**

• Série 4

Tableau 5 : Egouttage en fonction du polymère

|  | Alpha / Bêta | Drainage (s) | | |
|---|---|---|---|---|
|  |  | 1,7 kg/T | 1,7 kg/T + 0,6 kg/T PA | 3,4 kg/T |
| **P2-B** | 0,5 / 2 | 17,06 | 12,05 | 13,2 |
| **P3-B-1** | 0,5 / 2 | 16,6 | 11,83 | 12,09 |

(suite)

| | Alpha / Bêta | Drainage (s) | | |
|---|---|---|---|---|
| | | 1,7 kg/T | 1,7 kg/T + 0,6 kg/T PA | 3,4 kg/T |
| P3-CE-1 | 0,05 / 2 | Gel | | |
| P3-CE-2 | 0,5 / 6 | 21,31 | 16,82 | 16,04 |
| Blanc | | 32,97 | | |
| PA : Copolymère d'acrylamide et d'acide acrylique (70/30, mol %) sous forme de dispersion aqueuse | | | | |

Le polymère de l'invention additionné avec un polymère anionique **PA** génère une amélioration de l'égouttage. Le polymère **P3-CE-2** possédant un coefficient bêta supérieur à 4 n'apporte pas de performance en DDA. Le polymère P3-CE-1 ayant un coefficient alpha 0,05 n'est pas exploitable.

• Série 5

Tableau 6 Egouttage en fonction du polymère

| | Alpha | Drainage (s) |
|---|---|---|
| | | 1,7 kg/T |
| P2-B | 0,5 | 17,53 |
| P3-B-1 | 0,5 | 16,25 |
| CE-5-3 | | 18,88 |
| CE-6-5 | | 27,62 |
| Blanc | | 33,26 |
| CE-5-3 et CE-6-5 sont issus du brevet US 8,262,859 (exemples 3 et 5) | | |

Les polyvinylamines glyoxalées **CE-5-3** et **CE-6-5** présentent des égouttages moins performants que le polymère **P3.**

*Performances en application DSR (résistance à sec,*

pH pâte 6,5

Tableau 7 : Résistance à sec en fonction du polymère

| | % Burst index | % DBL SM | % DBL ST |
|---|---|---|---|
| Blanc | réf. | réf. | réf. |
| P2-B | 15 % | 9 % | 14 % |
| P3-B-1 | 18 % | 12 % | 26 % |
| P3-B-5 | 19 % | 10 % | 18 % |
| P3-B-6 | 19 % | 17 % | 18 % |
| CE-5-3 | 9 % | 9 % | 19 % |
| CE-6-5 | 2 % | 4 % | 9 % |

Les performances en Burst (Eclatement) sont améliorées par l'utilisation du polymère **P3** par rapport aux Polymères **P2** et aux contre-exemples CE. La même tendance est observée pour la mesure de longueur de rupture dans le sens marche (DBL SM) et dans le sens travers (DBL ST).

**Revendications**

1. Procédé de fabrication d'une feuille de papier ou de carton à partir d'une suspension fibreuse, comprenant les étapes suivantes :

   a) injection d'un polymère **P3** dans une suspension de fibres cellulosiques,
   b) formation d'une feuille de papier ou de carton,
   c) séchage de la feuille de papier ou de carton,
   le polymère **P3** étant préparé, préalablement à l'étape a), à partir d'un polymère hydrosoluble **P1** d'au moins un monomère non ionique choisi parmi l'acrylamide, le méthacrylamide, le N,N-diméthylacrylamide, et l'acrylonitrile,
   le polymère **P1** étant soumis à une réaction **Re1** pour donner un polymère **P2,** lequel est soumis ensuite à une réaction **Re2** pour donner le polymère **P3,** lequel est injecté à la suspension fibreuse dans un délai de 24 heures par rapport au début de la réaction **Re1** ;

   - la réaction **Re1** consistant à préparer un polymère **P2** comprenant des fonctions isocyanate par réaction pendant 10 secondes à 60 minutes entre (i) un hydroxyde d'alcalin et/ou un hydroxyde d'alcalino-terreux, (ii) un hypo-halogénure d'alcalin et/ou un hypo-halogénure d'alcalino-terreux et (iii) le polymère **P1,**

   la réaction **Re1** étant réalisée à une température comprise entre 30°C et 60°C, avec un coefficient Alpha = moles d'hypo-halogénure / moles de monomère non ionique du polymère hydrosoluble **P1** compris entre 0,1 et 1,0 et un coefficient Béta = moles d'hydroxyde / molesd'hypo-halogénure compris entre 0,5 et 4,0,
   le polymère **P1** présentant un poids moléculaire moyen en poids compris entre 100 000 et 20 millions,

   - la réaction **Re2** consistant à préparer un polymère **P3** par réaction entre (iv) un composé comprenant au moins une fonction aldéhyde ou un composé pouvant générer au moins une fonction aldéhyde et (v) le polymère **P2** comprenant des fonctions isocyanate,

   la réaction **Re2** étant réalisée à une température comprise entre 10°C et 60°C, par addition au polymère **P2** de 2 % à 50 % de composé comprenant au moins une fonction aldéhyde ou de composé pouvant générer au moins une fonction aldéhyde, % en poids par rapport au poids du polymère **P2.**

2. Procédé selon la revendication 1, *caractérisé* **en ce que** le polymère **P1** est non ionique.

3. Procédé selon la revendication 1 ou 2, *caractérisé* **en ce que** le polymère **P1** est un homopolymère d'acrylamide ou de méthacrylamide.

4. Procédé selon l'une des revendications 1 à 3, *caractérisé* **en ce que**, pour la réaction **Re2,** le composé comprenant au moins une fonction aldéhyde est choisi parmi le glyoxal, le glutaraldéhyde, le furane-dialdéhyde, le 2-hydroxyadipaldéhyde, le succinaldéhyde, le dialdéhyde amidon, le 2,2-diméthoxyethanal et leurs combinaisons.

5. Procédé selon l'une des revendications 1 à 4, **caractérisé en ce que**, pour la réaction **Re2,** le composé comprenant au moins une fonction aldéhyde est le glyoxal.

6. Procédé selon l'une des revendications 1 à 5, *caractérisé* **en ce que**, pour la réaction **Re2,** le composé pouvant générer au moins une fonction aldéhyde est un polyépoxyde.

7. Procédé selon l'une des revendications 1 à 6, *caractérisé* **en ce que**, pour la réaction **Re2,** le composé pouvant générer au moins une fonction aldéhyde est un polymère **P5** non ionique, cationique, anionique ou amphotère issu de la réaction entre un composé comprenant au moins une fonction aldéhyde et au moins un polymère base **P4** comprenant au moins un monomère non-ionique choisi parmi l'acrylamide, le méthacrylamide, le N,N-diméthylacrylamide, et l'acrylonitrile.

**8.** Procédé selon la revendication 7, *caractérisé* **en ce que** le polymère base **P4** comprend en outre un monomère cationique choisi dans le groupe comprenant l'acrylate de diméthylaminoéthyle (ADAME) quaternisé ou salifié, le méthacrylate de diméthylaminoéthyle (MADAME) quaternisé ou salifié, le chlorure de dimethyldiallylammonium (DADMAC), le chlorure d'acrylamidopropyltrimethylammonium (APTAC), et le chlorure de methacrylamidopropyltrimethylammonium (MAPTAC).

**9.** Procédé selon la revendication 7 ou 8, *caractérisé* **en ce que** le polymère base **P4** comprend en outre un monomère anionique du choisi parmi l'acide 2-acrylamido-2-méthylpropane sulfonique, l'acide acrylique, l'acide méthacrylique, l'acide itaconique, et/ou leurs sels.

**10.** Procédé selon l'une des revendications 7 à 9, *caractérisé* **en ce que** le polymère **P5** est obtenu par réaction entre un composé comprenant au moins une fonction aldéhyde et au moins un polymère base **P4** dans un délai maximal de 12 heures avant d'être ajouté au polymère **P2**.

**11.** Procédé selon l'une des revendications 1 à 10, *caractérisé* **en ce que** le polymère **P3** est introduit dans les eaux blanches et/ou dans la pâte épaisse et/ou dans le mélange formé par les eaux blanches et la pâte épaisse après homogénéisation de la suspension fibreuse dans la pompe de dilution.

**12.** Procédé selon l'une des revendications 1 à 11, *caractérisé* **en ce que** le polymère **P1** présente un poids moléculaire moyen en poids compris entre 250 000 et 5 millions de daltons.

**13.** Procédé selon l'une des revendications 1 à 12, *caractérisé* **en ce que** :

- la réaction **Re1** est réalisée à partir d'une solution aqueuse ayant une concentration massique en polymère **P1** comprise entre 0,5 et 20%, à une température comprise entre 30°C et 60°C ;
- la réaction **Re2** est réalisée en présence du polymère **P2** et de 5 à 30% de composé comprenant au moins une fonction aldéhyde ou de composé pouvant générer au moins une fonction aldéhyde, en poids par rapport au polymère **P2**.

**Patentansprüche**

**1.** Verfahren zur Herstellung eines Papier- oder Kartonbogens aus einer faserstoffhaltigen Suspension, das die folgenden Schritte umfasst:

a) Injektion eines Polymers **P3** in eine Suspension aus Zellulosefasern,
b) Bildung eines Bogens aus Papier oder Karton,
c) Trocknen des Bogens aus Papier oder Pappe,
wobei das Polymer **P3** vor dem Schritt a) aus einem wasserlöslichen Polymer **P1** von mindestens einem nichtionischen Monomer, ausgewählt aus Acrylamid, Methacrylamid, N,N-Dimethylacrylamid und Acrylnitril, hergestellt wird,
das Polymer **P1** zu einer Reaktion **Re1** gebracht wird, um ein Polymer **P2** zu erhalten, welches anschließend zu einer Reaktion **Re2** gebracht wird, um das Polymer **P3** zu erhalten, welches innerhalb von 24 Stunden vom Beginn der Reaktion **Re1** in die faserstoffhaltige Suspension injiziert wird;

- die Reaktion **Re1** aus der Herstellung eines Polymers **P2** besteht, das durch die 10 Sekunden bis 60 Minuten dauernde Reaktion zwischen (i) einem Alkalihydroxid und/oder einem Erdalkalihydroxid, (ii) einem Alkalihypohalogenid und/oder einem Erdalkalihypohalogenid und (iii) dem Polymer **P1** Isocyanatfunktionen aufweist;

wobei die Reaktion **Re1** bei einer Temperatur zwischen 30°C und 60°C mit einem Alpha-Koeffizienten = Hypohalogenidmole / nichtionische Monomermole des wasserlöslichen Polymers **P1** zwischen 0,1 und 1,0 und einem Beta-Koeffizienten = Hydroxidmole / Hypohalogenidmole zwischen 0,5 und 4,0 durchgeführt wird, das Polymer **P1** ein gewichtsmittleres Molekulargewicht zwischen 100.000 und 20 Millionen aufweist,

- die Reaktion **Re2** aus der Herstellung eines Polymers **P3** besteht, das durch die Reaktion zwischen (iv) einer Verbindung mit mindestens einer Aldehydfunktion oder einer Verbindung, die mindestens eine Aldehydfunktion erzeugen kann, und (v) dem Polymer **P2** mit Isocyanatfunktionen entsteht,

wobei die Reaktion **Re2** bei einer Temperatur zwischen 10°C und 60°C durch Zugabe von 2 % bis 50 % einer Verbindung, die mindestens eine Aldehydfunktion umfasst, oder einer Verbindung, die mindestens eine Aldehydfunktion, in Gew.-%, bezogen auf das Gewicht des Polymers **P2,** erzeugen kann, zu dem Polymer **P2** durchgeführt wird.

2. Verfahren nach Anspruch 1, *dadurch gekennzeichnet,* **dass** das Polymer **P1** nichtionisch ist.

3. Verfahren nach Anspruch 1 oder 2, *dadurch gekennzeichnet,* **dass** das Polymer **P1** ein Homopolymer von Acrylamid oder Methacrylamid ist.

4. Verfahren nach einem der Ansprüche 1 bis 3, *dadurch gekennzeichnet,* **dass** die Verbindung für die Reaktion **Re2** mindestens eine Aldehydfunktion umfasst, die aus Glyoxal, Glutaraldehyd, Furandialdehyd, 2-Hydroxyadipaldehyd, Succinaldehyd, Dialdehydstärke, 2,2-Dimethoxyethanal und ihren Kombinationen ausgewählt ist.

5. Verfahren nach einem der Ansprüche 1 bis 4, *dadurch gekennzeichnet,* **dass** es sich bei der Verbindung für die Reaktion **Re2,** die mindestens eine Aldehydfunktion umfasst, um Glyoxal handelt.

6. Verfahren nach einem der Ansprüche 1 bis 5, *dadurch gekennzeichnet,* **dass** die Verbindung für die Reaktion **Re2,** die mindestens eine Aldehydfunktion erzeugen kann, ein Polyepoxid ist.

7. Verfahren nach einem der Ansprüche 1 bis 6, *dadurch gekennzeichnet,* **dass** die Verbindung für die Reaktion **Re2,** die mindestens eine Aldehydfunktion erzeugen kann, ein nicht-ionisches, kationisches, anionisches oder amphoteres Polymer **P5** ist, das aus der Reaktion zwischen einer Verbindung, die mindestens eine Aldehydfunktion umfasst, mit mindestens einem Basispolymer **P4** hervorgeht, das mindestens ein nicht-ionisches Monomer umfasst und aus Acrylamid, Methacrylamid, N,N-Dimethylacrylamid und Acrylnitril ausgewählt ist.

8. Verfahren nach Anspruch 7, *dadurch gekennzeichnet,* **dass** das Basispolymer **P4** zudem ein kationisches Monomer umfasst, das aus der Gruppe, bestehend aus Dimethylaminoethylacrylat (ADAME), quaternisiert oder in Salzform, Dimethylaminoethylmethacrylat (MADAME), quaternisiert oder in Salzform, Dimethyldiallylammoniumchlorid (DADMAC), Acrylamidopropyltrimethylammoniumchlorid (APTAC) und Methacrylamidopropyltrimethylammoniumchlorid (MAPTAC) ausgewählt ist.

9. Verfahren nach einem der Ansprüche 7 oder 8, *dadurch gekennzeichnet,* **dass** das Basispolymer **P4** darüber hinaus ein anionisches Monomer umfasst, das aus 2-Acrylamido-2-methylpropansulfonsäure, Acrylsäure, Methacrylsäure, Itaconsäure und/oder deren Salzen ausgewählt ist.

10. Verfahren nach einem der Ansprüche 7 bis 9, *dadurch gekennzeichnet,* **dass** das Polymer **P5** durch Reaktion zwischen einer Verbindung, die mindestens eine Aldehydfunktion umfasst, mit mindestens einem Basispolymer **P4** innerhalb eines Zeitraums von höchstens 12 Stunden vor der Zugabe zu dem Polymer **P2** hergestellt wird.

11. Verfahren nach einem der Ansprüche 1 bis 10, *dadurch gekennzeichnet,* **dass** das Polymer **P3** nach dem Homogenisieren der faserstoffhaltigen Suspension in der Verdünnungspumpe in das Weißwasser und/oder den Dickbrei und/oder die Mischung aus Weißwasser und Dickbrei eingebracht wird.

12. Verfahren nach einem der Ansprüche 1 bis 11, *dadurch gekennzeichnet,* **dass** das Polymer P1 ein gewichtsmittleres Molekulargewicht im Bereich von 250.000 bis 5 Millionen Dalton aufweist.

13. Verfahren nach einem der Ansprüche 1 bis 12, das **dadurch *gekennzeichnet* ist, dass**:

   - die Reaktion **Re1** aus einer wässrigen Lösung mit einer Massenkonzentration an Polymer **P1** zwischen 0,5 und 20 % bei einer Temperatur zwischen 30 °C und 60 °C durchgeführt wird;
   - die Reaktion **Re2** in Gegenwart des Polymers **P2** und 5 bis 30 % einer Verbindung durchgeführt wird, die mindestens eine Aldehydfunktion aufweist, oder einer Verbindung, die, in Gew.-% bezogen auf das Polymer **P2,** mindestens eine Aldehydfunktion erzeugen kann.

**Claims**

1. A method for producing a sheet of paper or cardboard from a fibrous suspension, comprising the following steps:

   a) injecting a polymer **P3** into a cellulose fiber suspension,
   b) forming a sheet of paper or cardboard,
   c) drying the sheet of paper or cardboard,
   the polymer **P3** being prepared, prior to step a), from a water-soluble polymer **P1** of at least one nonionic monomer selected from acrylamide, methacrylamide, N,N-dimethylacrylamide, and acrylonitrile,
   the **P1** polymer being subjected to a **Re1** reaction to give a **P2** polymer, which is then subjected to a **Re2** reaction to give the **P3** polymer, which is injected into the fibrous suspension within 24 hours of the start of the **Re1** reaction ;

   - the **Re1** reaction consisting in preparing a **P2** polymer comprising isocyanate functions by reaction for 10 seconds to 60 minutes between (i) an alkali hydroxide and/or an alkaline-earth hydroxide, (ii) an alkali hypohalide and/or an alkaline-earth hypohalide and (iii) the polymer **P1**,

   the **Re1** reaction being carried out at a temperature between 30°C and 60°C, with a coefficient Alpha = moles of hypohalide / moles of non-ionic monomer of the water-soluble polymer **P1** is between 0.1 and 1.0 and a coefficient Beta = moles of hydroxide / moles of hypohalide is between 0.5 and 4.0,
   the **P1** polymer having a weight average molecular weight between 100,000 and 20 million,

   - the **Re2** reaction consisting in preparing a **P3** polymer by reaction between (iv) a compound comprising at least one aldehyde function or a compound which can generate at least one aldehyde function, and (v) the **P2** polymer comprising isocyanate functions,

   the **Re2** reaction being carried out at a temperature between 10°C and 60°C, by adding to the **P2** polymer between 2% and 50% of compound comprising at least one aldehyde function or of compound capable of generating at least one aldehyde function, % by weight with respect to the weight of the **P2** polymer.

2. The method according to claim 1, *characterized* **in that** the P1 polymer is non-ionic.

3. The method according to claim 1 or 2, *characterized* **in that** the **P1** polymer is an acrylamide or methacrylamide homopolymer.

4. The method according to one of claims 1 to 3, *characterized* **in that**, for the **Re2** reaction, the compound comprising at least one aldehyde function is chosen from glyoxal, glutaraldehyde, furan-dialdehyde, 2-hydroxyadipaldehyde, succinaldehyde, starch dialdehyde, 2,2-dimethoxyethanal and combinations thereof.

5. The method according to any one of claims 1 to 4, **characterized in that**, for the **Re2** reaction, the compound comprising at least one aldehyde function is glyoxal.

6. The method according to any of claims 1 to 5, *characterized* **in that** for the **Re2** reaction, the compound that can generate at least one aldehyde function is a polyepoxide.

7. The method according to one of claims 1 to 6, *characterized* **in that**, for the **Re2** reaction, the compound which can generate at least one aldehyde function is a nonionic, cationic, anionic, or amphoteric **P5** polymer resulting from the reaction between a compound comprising at least one aldehyde function and at least one base polymer **P4** comprising at least one nonionic monomer chosen from acrylamide, methacrylamide, N,N-dimethylacrylamide, and acrylonitrile.

8. The method according to claim 7, *characterized* **in that** the base polymer **P4** further comprises a cationic monomer selected from the group comprising quaternized or salified dimethylaminoethyl acrylate (ADAME) quaternized or salified dimethylaminoethyl methacrylate (MADAME), dimethyldiallylammonium chloride (DADMAC), acrylamidopropyltrimethylammonium chloride (APTAC), and methacrylamidopropyltrimethylammonium chloride (MAPTAC).

9. The method according to claim 7 or 8, *characterized* **in that** the base polymer **P4** further comprises an anionic monomer of the selected from 2-acrylamido-2-methylpropane sulfonic acid, acrylic acid, methacrylic acid, itaconic acid, and/or salts thereof.

10. The method according to one of claims 7 to 9, *characterized* **in that** the **P5** polymer is obtained by reaction between a compound comprising at least one aldehyde function and at least one base polymer **P4** within a maximum of 12 hours before being added to the **P2** polymer.

11. The method according to one of the claims 1 to 10, *characterized* **in that** the **P3** polymer is introduced into the white water and/or into the thick stock and/or into the mixture formed by the white water and the thick stock after homogenization of the fibrous suspension in the fan pump.

12. The method according to any of claims 1 to 11, *characterized* **in that** the **P1** polymer has a weight average molecular weight between 250,000 and 5 million daltons.

13. The method according to one of the claims 1 to 12, *characterized* **in that**:

- the **Re1** reaction is carried out from an aqueous solution having a mass concentration of polymer **P1** of between 0.5 and 20%, at a temperature of between 30°C and 60°C;
- the **Re2** reaction is carried out in the presence of the **P2** polymer and from 5 to 30% of compound comprising at least one aldehyde function or of compound capable of generating at least one aldehyde function, by weight relative to the **P2** polymer.

**EP 4 267 794 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012017172 A
- WO 0011046 A
- US 8262859 B